# DEMANDE DE BREVET EUROPEEN

(11) **EP 1 346 702 A1**
(43) Date de publication de la demande: **24.09.2003**
(21) Numéro de dépôt: 02405214.4
(22) Date de dépôt: 21.03.2002
(51) Int. Cl.: A61C 13/00

(54) **Procédé de réalisation d'une reconstruction dentaire en céramique**

(71) Demandeur: Metalor Technologies SA, 2009 Neuchâtel (CH)
(72) Inventeur: Muerrle, Ulrich, 75175 Pforzheim (DE); Hornberger, Helga, 2000 Neuchâtel (CH)
(74) Mandataire: Gresset, Jean

(57) **Abrégé**

L'invention concerne un procédé de réalisation d'une pièce de reconstruction dentaire, qui consiste à:
- se munir d'un modèle de ladite pièce,
- former un premier moule de ce modèle,
- réaliser, avec ce moule, une pièce isotropiquement thermo-expansible identique au modèle,
- porter cette pièce à une température telle qu'elle subit une augmentation de volume la transformant en une réplique agrandie du modèle,
- former un deuxième moule de cette réplique,
- réaliser, avec ce moule, une pièce en céramique identique à la réplique, et
- porter cette pièce à une température telle qu'elle subit une diminution de volume la transformant en une réplique en céramique frittée identique au modèle initial.

## Description

La présente invention se rapporte à l'art dentaire. Elle concerne, plus particulièrement, un procédé de reconstruction dentaire ainsi que la pièce en résultant.

Il existe de nombreuses techniques pour réaliser une pièce de reconstruction dentaire, telle qu'une couronne ou un bridge. L'une d'elles, faisant l'objet de la demande EP 00810651, permet d'obtenir, quasiment à la carte, une pièce dont la composition et les teneurs respectives en éléments non précieux, semi-précieux et précieux peuvent être choisis dans une très large palette. Typiquement, cette pièce comporte un squelette poreux en matériau réfractaire représentant de 15 à 70% de son volume et, infiltré dans ce squelette, au moins un métal qui peut être choisi parmi l'or, le cobalt, le fer, l'aluminium et le magnésium avec, éventuellement en plus, au moins un métal choisi parmi l'argent, le chrome, le zinc, le cuivre, le gallium, le titane, le zirconium, l'étain, l'indium, le silicium et le tantale.

Cette technologie est, certes, remarquable pour la grande diversité des reconstructions dentaires qu'elle permet d'offrir aux patients, mais elle ne répond pas à l'attente de ceux qui, dans la profession, veulent des couronnes et bridges en céramique, dont la réalisation est simple et ne nécessite pas d'équipement coûteux.

Les céramiques, telles que l'alumine (oxyde d'aluminium), mais surtout, la zircone (oxyde zirconium), constituent des matériaux idéals pour la reconstruction dentaire car elles sont, à la fois, bio-compatibles, très dures et très résistantes. La zircone convient particulièrement bien pour des bridges postérieurs. Dans l'état actuel de la technique, les pièces de reconstruction en céramique sont généralement fabriquées par usinage, ce qui nécessite des équipements relativement lourds et l'intervention de spécialistes pour leur utilisation.

La présente invention a pour but de fournir un procédé de reconstruction exempt de l'inconvénient sus-mentionné.

De façon plus précise, l'invention concerne un procédé de réalisation d'une pièce de reconstruction dentaire en céramique, qui consiste à:
- se munir d'un modèle de ladite pièce,
- former un premier moule de ce modèle,
- réaliser, avec ce moule, une première pièce isotropiquement thermo-expansible identique au modèle,
- porter cette première pièce à une température telle qu'elle subit une augmentation de volume la transformant en une réplique agrandie du modèle,
- former un deuxième moule de cette réplique,
- réaliser, avec ce moule, une deuxième pièce en céramique identique à la réplique, et
- porter cette deuxième pièce à une température telle qu'elle subit une diminution de volume la transformant en une réplique en céramique frittée identique au modèle initial.

Le procédé selon l'invention comporte encore les principales caractéristiques suivantes:
- les premier et deuxième moules sont en silicone;
- la pièce thermo-expansible comporte un matériau choisi dans le groupe qui comprend TiB₂, TiC, TiN, WC, ZrB₂, ZrC et tout polymère doté de propriétés analogues;
- de préférence, la pièce thermo-expansible comporte un mélange TiN-Al₂O₃;
- la pièce thermo-expansible est portée, en atmosphère d'oxygène correspondant à un débit d'environ 20 litres par heure, à une température ne dépassant pas 1000°C, avantageusement comprise entre 700 et 900°C;
- l'élévation de température se fait à une vitesse de 1 à 3°C par minute et la température est maintenue pendant une heure environ;
- la pièce en céramique est à base de zircone, d'alumine ou d'un mélange de zircone et d'alumine.

D'autres caractéristiques de la présente invention ressortiront de la description qui va suivre, faite en regard du dessin annexé, dans lequel les figures 1 à 7 illustrent les différentes étapes du procédé.

Sur la figure 1, on a représenté très schématiquement en 10 une pièce de reconstruction dentaire en cire réalisée, par tout procédé connu de l'homme de métier, à partir de l'empreinte effectuée par le dentiste dans la bouche du patient.

La figure 2 montre que, tout d'abord, la réplique 10 est moulée dans un bloc de silicone ou autre matériau approprié 12.

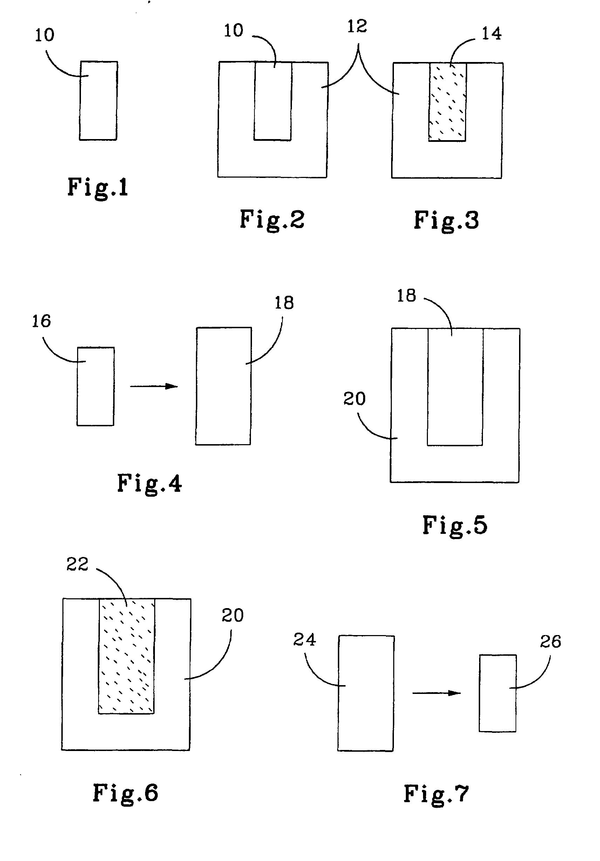

Comme représenté sur la figure 3, le moule 12 ainsi constitué est alors rempli d'une substance thermo-expansible 14, c'est-à-dire susceptible de subir une augmentation de volume sous l'effet de la température. Il peut s'agir, à titre d'exemple, d'un mélange de nitrure de titane (TiN) et d'oxyde d'aluminium (Al₂O₃) sous forme de poudre, additionné de paraffine et d'un dispersant tel que celui commercialisé par la firme Fluka sous la référence Brij 72. Typiquement, le mélange de poudre contient, en volume, 80% de TiN et 20% d'Al₂O₃. Il représente 90.9% en poids de la substance 14, la paraffine 8.6% et le dispersant 0.5%.

Un moulage à chaud, effectué à une température proche de 100°C avec l'aide d'une table vibrante, permet d'obtenir une pièce 16 identique à la réplique 10, qui, comme illustré par la figure 4, est alors portée, en atmosphère d'oxygène correspondant à un débit d'environ 20 litres d'oxygène par heure, à une température ne dépassant pas 1000°C, avantageusement comprise entre 700 et 900°C. De préférence, l'élévation de température se fait à une vitesse de 1 à 3°C par minute et une température de 800°C est maintenue pendant 1 heure environ.

Cette opération d'oxydation a pour effet de transformer le nitrure de titane en oxyde de titane (TiO₂). Cela provoque une augmentation de volume isotropique de la pièce 16 qui devient une réplique agrandie 18 de la réplique 10. Avec le mélange précédemment décrit, dans lequel l'oxyde d'aluminium sert à ajuster le degré d'oxydation, l'accroissement de volume est de 65%.

L'opération suivante, représentée à la figure 5, consiste à mouler la réplique agrandie 18 dans un bloc de silicone ou autre matériau approprié 20.

Comme le montre la figure 6, le moule 20 ainsi constitué est alors rempli d'un mélange céramique 22 comportant de la zircone (ZrO₂) sous forme de poudre, de la paraffine et un mélange de dispersants tels que le Brij 72 déjà mentionné et celui commercialisé par la firme ICI sous la dénomination Hypermer KD4. Selon le mode de réalisation décrit, ZrO₂ représente 90.9% en poids du mélange, la paraffine 8.4% et le dispersant 0.7%.

Un moulage à chaud, effectué à une température proche de 100°C avec l'aide d'une table vibrante, permet d'obtenir une pièce 24 identique à la réplique agrandie 18, qui, comme illustré par la figure 7, est alors portée à une température d'environ 1500°C pendant une heure, environ, afin de réaliser son frittage.

Le frittage a pour effet de réduire isotropiquement le volume de la pièce 24. Avec les mélanges précédemment décrits, la réduction est telle que la pièce 24 devient une réplique en zircone frittée 26 de la pièce de base 10.

Il ne reste plus, alors, qu'à recouvrir cette pièce de reconstruction d'une porcelaine décorative modelée extérieurement, selon tout procédé connu de l'homme de métier, pour obtenir une prothèse prête à prendre place dans la bouche du patient.

La présente description a été faite en se référant à l'utilisation, d'une part, d'un mélange à base de TiN-Al₂O₃ comme base de la substance expansible 14 et, d'autre part, de ZrO₂ comme céramique 22. La composition exacte de ces deux produits a été définie de manière à ce que l'augmentation de volume de la substance expansible résultant de son oxydation soit compensée au plus juste par la diminution de volume de la céramique résultant de son frittage.

Il va de soi, cependant, que l'invention n'est aucunement limitée à cette réalisation. C'est ainsi, par exemple, que la substance expansible 14 peut aussi comporter l'un des produits choisi dans le tableau ci-dessous:

| Produit de départ | Produit oxydé | Expansion (%) |
|---|---|---|
| TiB₂ | TiO₂ | 21,41 |
| TiC | TiO₂ | 54,36 |
| WC | WO₂ | 51,34 |
| ZrB₂ | ZrO₂ | 12,81 |
| ZrC | ZrO₂ | 36,39 |

La substance expansible peut aussi être un polymère expansible, tel que celui commercialisé par Akzo Nobel sous la référence Expancel 551 DU 20, associé à un agent de bouillonement.

Il va de soi, également, que la céramique peut aussi être de l'alumine ou un mélange d'alumine et de zircone.

Dans tous les cas, le choix de la céramique désirée dictera la composition du produit expansible de manière à obtenir l'effet de compensation optimum.

Ainsi est proposé un procédé permettant de réaliser une pièce de reconstruction dentaire en céramique. Le gros avantage du procédé réside dans le fait que l'équipement nécessaire est léger et peu coûteux mais aussi que son utilisation est particulièrement simple. Un tel équipement est donc à la portée de tout prothésiste dentaire.

## Revendications

1. Procédé de réalisation d'une pièce de reconstruction dentaire, **caractérisé en ce qu'**il consiste à:
- se munir d'un modèle (10) de ladite pièce,
- former un premier moule (12) de ce modèle,
- réaliser, avec ce moule, une pièce isotropiquement thermo-expansible (16) identique au modèle (10),
- porter cette pièce à une température telle qu'elle subit une augmentation de volume la transformant en une réplique agrandie (18) du modèle (10),
- former un deuxième moule (20) de cette réplique,
- réaliser, avec ce moule, une pièce en céramique (24) identique à la réplique (18), et
- porter cette pièce à une température telle qu'elle subit une diminution de volume la transformant en une réplique en céramique frittée (26) identique au modèle initial (10).

2. Procédé selon la revendication 1, **caractérisé en ce que** les premier (12) et deuxième (20) moules sont en silicone.

3. Procédé selon l'une des revendications 1 et 2, **caractérisé en ce que** la pièce thermo-expansible (16) comporte un matériau choisi dans le groupe qui comprend TiB₂, TiC, TiN, WC, ZrB₂, ZrC et tout polymère doté de propriétés analogues.

4. Procédé selon l'une des revendications 1 et 2, **caractérisé en ce que** la pièce thermo-expansible (16) comporte un mélange TiN-Al₂O₃.

5. Procédé selon l'une des revendications 1 à 4, **caractérisé en ce que** la pièce thermo-expansible (16) est portée, en atmosphère d'oxygène correspondant à un débit d'environ 20 litres d'oxygène par heure, à une température ne dépassant pas 1000°C.

6. Procédé selon la revendication 5, **caractérisé en ce que** l'élévation de température se fait à une vitesse de 1 à 3°C par minute et la température est maintenue pendant une heure environ.

7. Procédé selon l'une des revendications 1 à 6, **caractérisé en ce que** la pièce en céramique (24) est à base de zircone, d'alumine ou d'un mélange de zircone et d'alumine.

## Revendications modifiées

### Revendications modifiées conformément à la règle 86(2) CBE.

1. Procédé de réalisation d'une pièce de reconstruction dentaire, **caractérisé en ce qu'**il consiste à:
- se munir d'un modèle (10) de ladite pièce,
- former un premier moule (12) de ce modèle,
- réaliser, avec ce moule, une pièce isotropiquement thermo-expansible (16), identique au modèle (10), formée d'un matériau susceptible de se transformer en une céramique par oxydation,
- porter cette pièce à une température telle qu'elle se transforme, par oxydation, en une réplique agrandie (18) en céramique du modèle (10),
- former un deuxième moule (20) en silicone de cette réplique,
- réaliser, avec ce moule, une pièce en céramique (24) identique à la réplique (18), et
- porter cette deuxième pièce à une température telle que la céramique subisse un frittage entraînant une diminution du volume de la pièce, de sorte qu'elle se transforme en une réplique (26) identique au modèle initial (10).

2. Procédé selon la revendication 1, **caractérisé en ce que** le premier moule (12) est en silicone.

3. Procédé selon l'une des revendications 1 et 2, **caractérisé en ce que** la pièce thermo-expansible (16) comporte un matériau choisi dans le groupe qui comprend TiB₂, TiC, TiN, WC, ZrB₂, ZrC.

4. Procédé selon l'une des revendications 1 et 2, **caractérisé en ce que** la pièce thermo-expansible (16) comporte un mélange TiN-Al₂O₃.

5. Procédé selon l'une des revendications 1 à 4, **caractérisé en ce que** la pièce thermo-expansible (16) est portée, en atmosphère d'oxygène correspondant à un débit d'environ 20 litres d'oxygène par heure, à une température ne dépassant pas 1000°C.

6. Procédé selon la revendication 5, **caractérisé en ce que** l'élévation de température se fait à une vitesse de 1 à 3°C par minute et la température est maintenue pendant une heure environ.

7. Procédé selon l'une des revendications 1 à 6, **caractérisé en ce que** la pièce en céramique (24) est à base de zircone, d'alumine ou d'un mélange de zircone et d'alumine.
